# EUROPÄISCHE PATENTSCHRIFT

(11) **EP 2 215 026 B1**
(45) Veröffentlichungstag und Bekanntmachung des Hinweises auf die Patenterteilung: **14.11.2012**
(21) Anmeldenummer: 08802036.7
(22) Anmeldetag: 11.09.2008
(51) Int. Cl.: C03B 23/047, C03B 23/049, B22C 9/10, B01L 3/00

(54) **VERFAHREN UND VORRICHTUNG ZUR HERSTELLUNG VON GLASKÖRPERN MITTELS WIEDERZIEHVERFAHREN**
METHOD AND APPARATUS FOR PRODUCING GLASS BODIES BY MEANS OF REDRAWING METHODS
PROCÉDÉ ET DISPOSITIF DE FABRICATION DE CORPS EN VERRE PAR RÉ-ÉTIRAGE

(30) Priorität: 26.10.2007 DE 102007051370
(43) Veröffentlichungstag der Anmeldung: 11.08.2010
(73) Patentinhaber: Hilgenberg, Ingo, 34323 Malsfeld (DE)
(72) Erfinder: Hilgenberg, Ingo, 34323 Malsfeld (DE)
(74) Vertreter: Prüfer & Partner GbR European Patent Attorneys
(86) Internationale Anmeldenummer: PCT/EP2008/007476
(87) Internationale Veröffentlichungsnummer: WO 2009/052902

(56) Entgegenhaltungen:
- DE-B1- 2 430 428
- DE-B3-102006 015 223
- JP-A- 2005 053 754
- JP-A- 2006 294 440
- US-A- 2 812 562
- RECH S.: "Glastechnik" 1980, DEUTSCHER GRUNDSTOFFINDUSTRIE , LEIPZIG , XP002503439 Seite 197 - Seite 198

## Beschreibung

### Gebiet der Erfindung

Die vorliegende Erfindung bezieht sich auf ein Verfahren und eine Vorrichtung zur Herstellung von Glaskörpern mittels Wiederziehverfahren.

### Hintergrund der Erfindung

In einem Wiederziehverfahren wird ein stab- oder rohrartiger Glasrohling erhitzt und in plastischem Zustand zu einem Glaskörper mit gewünschtem Querschnittsmaß gezogen. Die Vorteile des Wiederziehverfahrens bestehen darin, dass auch kleinere Stückzahlen von Glaskörpern rentabel hergestellt werden können und dass die Produktion flexibel gestaltet werden kann. Denn im Gegensatz zu anderen Herstellungsverfahren für stab- oder rohrartige Glaskörper, wie z.B. dem Danner- oder Vello-Verfahren, ist beim Wiederziehverfahren keine Glasschmelze notwendig, die aus Rentabilitätsgründen permanent aufrecht erhalten werden sollte. Zudem ist das Wiederziehverfahren besonders geeignet, um stab- oder rohrartige Glaskörper mit geringen Querschnittsmaßen herzustellen. Wiedergezogene Glasrohlinge weisen typischerweise nur eine runde Querschnittsform auf.

Verfahren und Vorrichtungen, die für das Wiederziehen von Glaskörpern geeignet sind, sind bereits bekannt.

Die in der Patentschrift DE 2229164 beschriebene Vorrichtung ist für Glasziehverfahren allgemein geeignet und weist eine Anzahl konzentrisch verstellbarer, vorzugsweise als Formrollen ausgebildete Formkörper auf, die um die Oberfläche eines formbaren Rohrstranges rotieren, um Glasrohre während des Ziehvorganges kontinuierlich zu kalibrieren. Diese Lehre ist auf geformte Glaskörper mit runden Querschnittformen beschränkt.

In der DE 102006015223 B3 wird ein Wiederziehverfahren beschrieben, in welchem ein Glasrohr mittels eines senkrecht zum Glaskörper angeordneten Walzenpaars umgeformt wird, wobei das Walzenpaar an einer Position angeordnet ist, wo das Glas noch plastisch verformbar ist. Auch diese Lehre ist auf geformte Glaskörper mit bestimmten Querschnittsformen, nämlich runde, ovale und im wesentlichen rechteckförmige Querschnittsformen, beschränkt.

Die DE 19960210 C1 offenbart eine Vorrichtung zum Kalibrieren eines im Danner-, Vello-, A-Zug oder Wiederziehverfahren hergestellten Glaskörpers. Zum Kalibrieren wird ein Kalibrierring verwendet, der eine lichte Weite aufweist, die geringfügig kleiner als der zu reduzierende Außendurchmesser des ankommenden Rohres ist. Die Arbeitsfläche des Kalibrierrings kann auf einem Kreisbogen liegen, aber auch anderen Kurven, wie beispielsweise einer Hyperbel, folgen. Eine Berührung mit dem Glas findet tangential nur beim Maximum des Kreisbogens statt.
Diese Vorrichtung ist durch den Einsatz einer Justiereinrichtung, welche die Änderung der Position des Kalibrierrings fortwährend ermöglichen soll, vergleichsweise aufwändig.

In dem in US 6260388 B beschriebenen Verfahren können Glasrohlinge, die eine Vielzahl durchgehender Kanäle aufweisen, mittels Extrusion durch eine trichterförmige Reduktionsmatrize zu Glaskörpern mit reduzierter Querschnittsform geformt werden. Die Kanäle der Glasrohlinge werden vor der Extrusion mit einem formbaren Material, z.B. einem mikrokristallinen Wachs, gefüllt, welches nach der Extrusion wieder entfernt wird. Bei diesem Verfahrensschritt handelt es sich jedoch nicht um ein Wiederziehverfahren, sondern um ein Extrusionsverfahren. Außerdem müssen eventuell vorhandene Hohlräume im Glasrohling mit einem speziellen Material gefüllt werden.

DE 24 30 428 B1 offenbart ein Kalibrierverfahren für wiedergezogene Rohre aus Quarzglas oder Quarzgut, in welchem zwei sich gegenüberliegende Graphitplatten durch eine Kombination aus Rotations- und Längsziehbewegung bei tangierender Berührung des Glasrohrs einen runden, kalibrierten Rohrquerschnitt bilden.

In der JP 2005053754 werden Ziehwalzen beschrieben, die das Wiederziehen einer Vorform zu einem Material mit ähnlichem Querschnitt wie die Vorform, aber kleinerem Durchmesser ermöglichen.

In der JP 2006294440 wird ein Quarzglaswiederziehverfahren offenbart, in welchem ein Glasrohr mit einem oder mehreren flachen Abschnitten einheitlicher Breite entlang der Längsrichtung an der Außenfläche des Glasrohrs versehen wird, wobei eine formgebende Einrichtung das Glasrohr während des Schritts des Erhitzens durch die mutmaßliche Heizquelle kontaktiert.

US 2,812,562 offenbart die Verwendung von Borsilikatglasrohren in einem Gießverfahren für Metallartikel, wobei die Herstellung der Borsilikatglasrohre nicht beschrieben wird. Glastechnik, 1980, Seiten 197 und 198, offenbart die Verwendung von vakuumkalibrierten präzisionsgeformten Glasrohren.

Aufgabe der vorliegenden Erfindung ist es, ein verbessertes Verfahren und eine verbesserte Vorrichtung zur Herstellung wiedergezogener Glasformkörper bereitzustellen.

### Zusammenfassung der Erfindung

Diese Aufgabe wird gelöst durch ein Verfahren gemäß Anspruch 1. Bevorzugte Ausführungsformen sind in den Unteransprüchen festgelegt. Weitere Gegenstände der Erfindung sind eine Vorrichtung gemäß Anspruch 6, ein durch Wiederziehen geformter Glaskörper gemäß Anspruch 8 und die Verwendung des wiedergezogenen Glaskörpers gemäß den Ansprüchen 11 und 12, sowie entsprechende Unteransprüche.

### Detaillierte Beschreibung der Erfindung

Nach dem erfindungsgemäßen Konzept wird ein nach Erhitzen verformbarer Glasrohling, z.B. ein Glasrohr oder -stab, wiedergezogen. Im Gegensatz zu den bisher für Wiederziehverfahren bekannten Einrichtungen und Mitteln ist der Erfinder einen anderen Weg gegangen, um den wiedergezogenen Glaskörper anschließend zu formen: Der wiedergezogene Glaskörper wird in verformbarem Zustand in eine formgebende Einrichtung mit starren Flächen eingeführt, so dass die Maße der Querschnittsform des wiedergezogenen Glaskörpers durch zumindest abschnittsweisen Kontakt mit mindestens einer starren Fläche der formgebenden Einrichtung auf einer längs in Ziehrichtung erstreckenden Strecke exakt definiert werden. Dabei wird der verformbare Glaskörper, während er die formgebende Einrichtung durchläuft, dazu gebracht, sich allen starren Flächen anzupassen. Durch diesen Vorgang wird dem (u. U. gerade noch) verformbaren Glaskörper in seinen Außenmaßen die Form der starren Flächen, soweit ein Kontakt stattfindet, exakt aufgezwungen bzw. aufgeprägt. Dort, wo kein Kontakt stattfindet, gibt es einen günstigen weiteren Gestaltungsspielraum. Die Anpassung an die starren Flächen und das Aufzwingen bzw. Aufprägen kann in der formgebenden Einrichtung entlang der Ziehstrecke allmählich erfolgen. Letztlich ist der noch vor der Erstarrung gewährleistete Kontakt im Verlauf des Ziehens durch die Einrichtung, soweit ein solcher Kontakt stattfindet, von Bedeutung. Das heißt, während der wiedergezogene Glaskörper noch den Kontakt mit den starren Flächen halten muss, erkaltet er, so dass die von der formgebenden Einrichtung aufgeprägte Struktur exakt im solidifizierten Glaszustand "eingefroren" wird. Auch in einem Zustand, wo der Glaskörper alle gewählten starren Flächen derformgebenden Einrichtung noch kontaktiert, kann er nach wie vor verformbar sein, allerdings weniger verformbar als beim Eintritt, da sich seine Temperatur verringert hat. In dem gerade noch verformbaren Zustand behält der Glaskörper seine Querschnittsform im Wesentlichen bei, allerdings sind immer noch Korrekturen und/oder Formgebungsmittel möglich, z.B. durch Aufteilen in verschiedene Kontaktierphasen, durch konisch zulaufende Begrenzungsflächen, durch "Einprägen" von Kanalläufen, durch Einblasen von Druckluft (falls der Glaskörper hohl ist) usw. Vorteilhafterweise erstarrt der geformte Glaskörper noch innerhalb der formgebenden Einrichtung, so dass nach dessen Austritt keine Formungsdefekte mehr auftreten können. Erfindungsgemäß werden somit frei gestaltbare und dennoch exakte Querschnittsformen erhalten. Das erfindungsgemäße Konzept hat gegenüber dem Stand der Technik deutliche Vorteile. Zum einen benötigt eine derartige formgebende Vorrichtung im Gegensatz zu der in DE 19960210 C1 beschriebenen Kalibriereinrichtung keine aufwändige, messtechnisch gesteuerte Justiereinheit. Zum anderen ist es, im Gegensatz zu dem in US 6260388 B beschriebenen Extrudierverfahren, im Falle eines hohlen Glaskörpers nicht notwendig, die Hohlräume des Glasrohlings mit einem speziellen Material zu füllen, was den Vorteil hat, dass auch die Querschnittsformmaße des Hohlraums frei dimensionierbar sind. Ein dort beschriebener Extrudierschritt ist ein eigenständiger, zusätzlicher Schritt, der vor dem Wiederziehvorgang vorgenommen wird. Um extrudierbar zu sein, muss das in die Extrusionsform eingepresste Glas außerdem relativ plastisch sein. Zudem steht das Glas bei diesem Extrudierschritt unter Druck und nicht unter Zug. Im Vergleich zu den in DE 2229164 und DE 102006015223 B3 beschriebenen Wiederziehverfahren, in denen Rollen bzw. Walzen als formgebende Mittel verwendet werden, ist die vorliegende Erfindung nicht auf bestimmte Querschnittsformen beschränkt, sondern die Querschnittsformen können beliebig und dennoch äußerst präzise eingestellt werden. Auch ist eine komplizierte Steuerung und Positionierung von Rollen/Walzen entbehrlich.

Abschnittsweise bedeutet, dass die formgebende Einrichtung Maße des wiedergezogenen Glaskörpers unter Umständen nur über einen Längenabschnitt definiert, z.B. indem die formgebende Einrichtung nach dem Durchgang eines bestimmten Längenabschnitts des wiedergezogenen Glaskörpers den wiedergezogenen Glaskörpers nicht mehr oder nur in einem Teilbereich des Außenumfangs kontaktiert. Die formgebende Einrichtung kann Maße der Querschnittsform des wiedergezogenen Glaskörpers jedoch bevorzugt über einen Hauptteil seiner Länge definieren. Es ist ferner möglich und je nach Bedarf sogar erwünscht, dass der wiedergezogene Glaskörper im gesamten Verlauf seines Durchtritts durch die formgebende Einrichtung nicht über seinen gesamten Außenumfang in Kontakt mit starren Flächen tritt. Damit ist es zum Beispiel möglich, weitere spezielle Oberflächenstrukturen an der Oberfläche des wiedergezogenen Glaskörpers zu bilden. Die Erfindung lässt somit einen großen Gestaltungsspielraum zu.

Unter starren Flächen sind Flächen zu verstehen, die die an den Kontaktflächen eine invariable Volumenbegrenzung für den wiedergezogenen Glaskörper festlegen. Die Gestaltung der formgebenden Einrichtung und damit der Kontaktflächen kann so festgelegt werden, dass der Glaskörper einerseits nach dem Erhitzungsschritt bereits in wiedergezogenem Zustand ist, andererseits aber in noch so verformbarem Zustand ist, dass Maße der so wiedergezogenen Glaskörper genau definierbar sind. Darüber hinaus ist die Streckenlänge der Kontaktfläche so gewählt, dass - ggf. unter zusätzlichem aktiven Kühlen der formgebenden Einrichtung - der wiedergezogene Glaskörper nach dem Austritt aus der formgebenden Einrichtung in nicht mehr verformbarem Zustand, vorzugsweise in erkaltetem Zustand vorliegt, um die definierten Maße exakt beibehalten zu können. Auf diese Weise ist es insgesamt möglich, beliebige Querschnittsformen, d.h. nicht nur runde, sondern z.B. auch ovale, ellipsoide, rechteckige, quadratische oder andere polygonaleQuerschnittssformen exakt und mit hoher Feinheit zu erhalten. Auch können erfindungsgemäß wiedergezogene runde Formen in ovale oder polygonale Formen des Glaskörpers überführt werden, oder umgekehrt. Ferner können durch entsprechend vorgesehene Lücken von Kontaktflächen Rundungen oder Krümmungen gebildet werden, zum Beispiel an Ecken einer polygonalartigen Querschnittsform.

Neben Querschnittsformen, die erhalten werden, indem die mindestens eine starre Fläche den wiedergezogenen Glaskörper vollständig umfasst, können auch Querschnittsformen des geformten Glaskörpers erhalten werden, die durch eine formgebende Einrichtung erhalten werden, die einerseits mindestens eine starre Fläche aufweist, wobei andererseits mindestens zwei in Ziehrichtung befindliche Längsseiten der mindestens einen starren Fläche nicht über die gesamte Länge der formgebenden Einrichtung miteinander verbunden sind, wodurch mindestens eine Lücke zwischen den starren Flächen bereitgestellt wird, die gezielt beeinflussbare Freiheitsgrade bei der Gestaltung der Querschnittsform ermöglicht.

Soweit der Kontakt zwischen der mindestens einen starren Fläche der formgebenden Einrichtung und dem wiedergezogenen Glaskörper stattfindet, handelt es sich bevorzugt um einen direkten, d.h. unmittelbaren Kontakt. Es ist aber auch möglich, dass der Kontakt zwischen der mindestens einen starren Fläche der formgebenden Einrichtung und dem wiedergezogenen Glaskörper über ein dazwischenliegendes Gaspolster so innig ist, dass eine effektive Volumenbegrenzung trotz Gaspolster stattfindet. Ein derartiges Gaspolster kann durch Gaseinlassöffnungen zu den oder in den starren Flächen bereitgestellt werden.

Somit kann durch die vorliegende Erfindung für den wiedergezogenen Glaskörper eine beliebige Querschnittsform eingestellt werden und falls gewünscht auch bestimmte Oberflächenstrukturen gebildet werden. Querschnittsform und gegebenenfalls Oberflächenstruktur können sogar über die Länge des wiedergezogenen Glaskörpers abschnittsweise geändert werden.

Die starren Flächen werden durch die formgebende Einrichtung gebildet, die ein- oder mehrteilig sein kann. So kann beispielsweise ein Materialblock, der ein durchgängiges rundes oder polygonales Innenprofil aufweist, eine einteilige formgebende Einrichtung darstellen. Das durchgängige runde oder polygonale Innenprofil kann z.B. durch eine Bohrung bereitgestellt werden. Ein derartiges rundes Innenprofil bildet eine Hohlform mit lediglich einer gleich bleibenden starren Fläche. Weist das Innenprofil hingegen ein polygonales Profil auf, so wird eine Hohlform mit 3, 4, 5, 6, 7, 8 oder mehr starren Flächen gebildet.

Besonders vorteilhaft ist eine aus mehreren Teilen zusammengesetzte formgebende Einrichtung. Zum einen gestaltet sich bei einer mehrteiligen formgebenden Einrichtung das Einführen des wiedergezogenen Glaskörper einfacher, da die einzelnen Teile der Form durch manuellen Zusammenbau oder maschinelle Positionierung um den wiedergezogenen herum positioniert werden können. Zum anderen kann eine solche Form während der laufenden Produktion ohne Unterbrechung aus der Wiederziehanlage entfernt werden, z.B. um die Form verschleißbedingt zu ersetzen oder um eine ein anderes Innenprofil aufweisende Form zu verwenden. Darüber hinaus kann eine mehrteilige formgebende Einrichtung die Änderung des Innenprofils der formgebenden Einrichtung in einem kontinuierlichen Prozess ermöglichen. Beispielsweise kann eine vierteilige formgebende Einrichtung aus vier identisch dimensionierten Quadern bestehen, die jeweils paarweise gegenüberliegend angeordnet werden, so dass sie den wiedergezogenen Glasstrang so umschließen, dass ein rechteckiges Profil erhalten wird. Durch Veränderung der Position der gegenüberliegenden Quader oder durch Verwenden verschieden dimensionierter Quader kann jeweils die Länge oder die Breite des rechteckigen Innenprofils variiert werden und somit das komplementäre Außenprofil des wiedergezogenen Glaskörpers variabel und dennoch exakt definiert werden.

Gemäß einer weiteren bevorzugten Ausführungsform umschließt die mindestens eine starre Fläche der formgebenden Einrichtung den wiedergezogenen Glaskörper vollständig, d.h. von allen Seiten, um ein genau definiertes Profil zu definieren.

Gemäß einer alternativen bevorzugten Ausführungsform bildet die mindestens eine starre Fläche kein den wiedergezogenen Glaskörper vollständig umfassendes Innenprofil, d.h. zwischen den beiden in Ziehrichtung befindlichen Längsseiten der mindestens einen starren Fläche bleibt durch Gestaltung oder Positionierung der formgebenden Einrichtung mindestens eine Lücke. Eine derartige formgebende Einrichtung ermöglicht wiedergezogene und geformte Glaskörper, die bewusst nur an bestimmten Stellen von der mindestens einen starren Fläche kontaktiert werden, während die Stellen des wiedergezogenen Glaskörpers, die die Lücke passieren, einen hohen Freiheitsgrad aufweisen. Ein solcher Freiheitsgrad kann z.B. vorteilhaft sein, wenn flexibel gestaltbare Rundungen in einer gekrümmt-planaren Querschnittsform des wiedergezogenen Glaskörpers erwünscht sind. Unter gekrümmt-planarer Querschnittsform ist eine Querschnittsform zu verstehen, die sowohl gekrümmte als auch planare Formen aufweist. So kann z.B. eine "rechteckartige" gekrümmt-planare Querschnittsform gebildet werden, die zwei kurze und zwei lange planare Seitenflächen sowie 4 gekrümmte Ecken aufweist. Die nicht kontaktierenden Glasflächen können zum Beispiel durch Einblasen von Gas bezüglich ihrer Krümmung variabel gestaltet werden. Es ist auch möglich, dass eine zunächst nicht kontaktierende Glasfläche zu einem späteren Zeitpunkt mindestens eine starre Fläche eines weiter stromabwärts liegenden Abschnitts der formgebenden Einrichtung kontaktiert.

Bevorzugt ist die Position der formgebenden Einrichtung so gewählt, dass der wiedergezogene Glaskörper nach Austritt aus der Heizeinrichtung in verformbarem Zustand und vor dem Erstarren in die formgebende Einrichtung eingeführt wird. Dabei hat sich überraschend gezeigt, dass der wiedergezogene Glaskörper von der Heizeinrichtung beabstandet und sogar in substantiellem Abstand von mindestens 10 cm, beispielsweise mit einem Abstand im Bereich von 50 cm bis 150 cm stromabwärts der Heizeinrichtung noch ausreichend verformbar ist, um durch Kontakt mit mindestens einer starren Fläche der formgebenden Einrichtung geformt zu werden. Dabei ist es besonders vorteilhaft, den Abstand zwischen Heizeinrichtung und formgebender Einrichtung so zu wählen, dass die Viskosität des Glases dergestalt ist, dass das Glas bei Eintritt in die vorgebende Einrichtung noch viskos genug ist, um sich durch die formgebende Einrichtung noch verformen zu lassen, aber andererseits nicht so viskos ist, dass während des Formens Abweichungen von der gewünschten Querschnittsform entstehen. Auf diese Weise wird ein Glaskörper mit besonders exakt geformtem Querschnittsprofil erhalten.

Vorzugsweise ist die Länge der formgebenden Einrichtung so bemessen, dass der anfangs noch verformbare wiedergezogene Glaskörper beim Austritt in erstarrter, im wesentlichen nicht mehr verformbarer Form vorliegt. Dies hat den Vorteil, dass ein geformter Glaskörper mit einer Querschnittsform erhalten wird, die gegenüber den Querschnittsmaßen der Hohlform eine noch exakterere Maßgenauigkeit aufweist, da dem formbaren wiedergezogenen Glaskörper die Möglichkeit gegeben wird, sich für eine ausreichend lange Strecke der mindestens einen starren Fläche der formgebenden Einrichtung anzupassen und in geformtem Zustand weiter in der Form verbleibt, bis er erstarrt und damit seine Querschnittsform festgelegt ist. Durch eine derartige Wahl der Länge der formgebenden Einrichtung wird ein Glaskörper erhalten, der eine noch exaktere Querschnittsform aufweist. Bevorzugt beträgt die Länge der formgebenden Einrichtung mindestens 10 mm und liegt weiter bevorzugt in einem Bereich von 10 mm bis 1000 mm, insbesondere in einem Bereich von 25 bis 100 mm. Weiter bevorzugt wird das Abkühlen und das damit verbundene Erstarren innerhalb der formgebenden Einrichtung durch aktive Kühlung unterstützt. Die Kühlung kann beispielsweise von außen erfolgen, noch effektiver ist die Bereitstellung von Kühlkanälen in der formgebenden Einrichtung, durch welche ein Kühlfluid geleitet wird, dessen Temperatur nach Bedarf manuell oder elektronisch eingestellt werden kann. Die Kühlung ist vorzugsweise so gestaltet, dass sich innerhalb der formgebenden Einrichtung ein Temperaturgradient eingestellt, der ein allmähliches Abkühlen des Glaskörpers innerhalb der formgebenden Einrichtung ermöglicht, beispielsweise durch aktives Kühlen von der Austrittsseite her.

Des Weiteren kann die formgebende Einrichtung eine Eintrittsöffnung aufweisen, die größere Querschnittsmaße als die eigentlich formgebende Hohlform mit ihren die gewünschten Maße definierenden starren Flächen aufweist. Eine solche vergrößerte Eintrittsöffnung kann durch eine sich langsam den Querschnittsmaßen der formgebenden Hohlform anpassenden konischen Struktur gebildet sein. Eine derartige Eintrittsöffnung erleichtert die Einführung eines wiedergezogenen Glaskörpers. Außerdem wird dadurch der Übergang vom ungeformten, wiedergezogenen Glaskörper, der eine größeres Querschnittsmaß als der geformte Glaskörper aufweist, zum geformten Glaskörper mit kleinerem Querschnittsmaß sanft gestaltet.

Die oben beschriebene, erfindungsgemäße Formgebung bietet viele Gestaltungsmöglichkeiten zur Formung eines wiedergezogenen Glaskörpers, wobei Querschnittsform, Außen- und ggf. Innenprofil und/oder Oberflächenstrukturen des wiedergezogenen Glaskörpers auf der Streckenlänge zwischen den Ein- und Austrittsseiten der formgebenden Einrichtung wirksam definiert werden können. Im Hinblick auf die Präzision ist es dabei vorteilhaft, wenn die Außenmaße des wiedergezogenen Glaskörpers und die Außenmaße einer Eintrittsöffnung oder eines engsten Bereichs der Hohlform der formgebenden Einrichtung annähernd identisch sind, weil dann die Formanpassungsveränderung in einem Zustand hoher Zähigkeit oder Viskosität des Glasmaterials möglichst gering ist.

Im Fall einer einteiligen formgebenden Einrichtung kann es beim erstmaligen Einführen des wiedergezogenen Glaskörpers vorteilhaft sein, wenn der wiedergezogene Glaskörper kleinere Außenmaße als eine Eintrittsöffnung oder ein engster Bereich der Hohlform der formgebenden Einrichtung aufweist, um den wiedergezogenen Glaskörper problemlos in die Form einführen zu können. Hat der eingeführte wiedergezogene Glaskörper einmal die gesamte Länge der formgebende Einrichtung passiert, können die Außenmaße des wiedergezogenen Glaskörpers wieder so eingestellt werden, dass sie annähernd identisch mit den Außenmaßen der Eintrittsöffnung oder des engsten Bereichs der formgebenden Einrichtung sind.

Sowohl einteilige als auch mehrteiligen Formen können alternativ zur Einführung über eine frontale Eintrittöffnung eine in Zieh-Längsrichtung verlaufende seitliche Einführungsöffnung aufweisen, die ein seitliches Einführen bzw. Einlegen des wiedergezogenen Glaskörpers in die formgebende Einrichtung erlaubt.

Die seitliche Einführungsöffnung kann in Querrichtung schmaler oder breiter als die Querschnittsform des wiedergezogenen Glaskörpers sein. Ist die seitliche Einführungsöffnung schmaler, kann es vorteilhaft sein, dass das Außenmaß des wiedergezogenen Glaskörper schmäler als die Breite der seitliche Einführungsöffnung in Querrichtung ist, um den wiedergezogenen Glaskörper problemlos seitlich in die Form einführen zu können. Ist der wiedergezogene Glaskörper seitlich in die formgebende Einrichtung eingeführt, können die Außenmaße des wiedergezogenen Glaskörpers wieder so eingestellt werden, dass sie annähernd identisch mit den Außenmaßen der Eintrittsöffnung oder des engsten Bereichs der formgebenden Einrichtung sind.

Für die mindestens eine starre Fläche der formgebenden Einrichtung, die den wiedergezogenen Glaskörper kontaktiert, wird vorzugsweise Graphit, Kohle, Quarzkohle, Keramik, Metall, Bornitrid, oder Quarzglas verwendet. Diese Materialien sind besonders geeignet, weil sie geringe Reibung bei hohen Temperaturen aufweisen. Bornitrid kann zudem vorteilhaft als Oberflächenbeschichtung für die mindestens eine starre Fläche der formgebenden Einrichtung verwendet werden, um die Härte und damit die Beständigkeit der Fläche(n) zu verbessern.

Das Material des zum Wiederziehen verwendeten Glasrohlings kann aus amorphen, polykristallinen oder kristallinen hoch- oder niederschmelzenden Gläsern, Hartgläsern, Weichgläsern oder glasartigen Stoffen ausgewählt sein. Neben einem glasartigen Hauptbestandteil können die Gläser weitere Zusätze enhalten, wie Metallionen, Metalloxide, Füllstoff oder Flussmittel. Bevorzugt werden Gläser wie Borsilikatglas oder Kalknatronglas verwendet, da sie Flussmittel enthalten und dadurch leichter zu schmelzen sind und bei der Formgebung geschmeidiger sind. Es ist aber auch möglich, z.B. Quarzglas oder Calciumfluorid mit dem erfindungsgemäßen Verfahren wiederzuziehen.

Ein weiterer Vorteil der vorliegenden Erfindung besteht darin, dass das erfindungsgemäße Konzept einem kontinuierlichen Prozess zugänglich ist und damit eine besonders rationelle Herstellung ermöglicht. Das erfinderische Konzept ermöglicht es, das Verfahren trotz starrer formgebender Einrichtung kontinuierlich zu gestalten.

Wenn der zum Wiederziehen verwendete Glasrohling hohl ist, z.B. im Falle eines Glasrohrs, so kann Gas über einen Innenhohlraum des Glasrohlings in den Innenhohlraum des wiedergezogenen Glaskörpers eingeblasen werden, um bei speziellen Geometrien der gewünschten Querschnittsform, wie z.B. Rechtecke oder Vielecke, eine exaktere Innenquerschnittsform des geformten Glaskörpers zu erzielen. Außerdem können hohle Glaskörper mit je nach Wunsch besonders dünnen Wandstärken, bevorzugt kleiner gleich 500 µm und sogar kleiner gleich 150 µm, erhalten werden, insbesondere in einem Bereich von 50 - 150 µm. Demnach ermöglicht das erfindungsgemäße Konzept extrem feine Strukturen und kleine Querschnitte bei dennoch sehr dünnen Wandstärken.

Werden (ggf.hohle) Glaskörper mit gekrümmt-planarer, rechteckiger, quadratischer oder anderer polygonaler Querschnittsform geformt, so weist im erkalteten Produkt mindestens eine planare Fläche eine Planarität von mindestens 95%, weiter bevorzugt mindestens 98% auf. Bevorzugt weisen mehrere Flächen eine Planarität von mindestens 95%, und noch besser von mindestens 98% auf, noch weiter bevorzugt weisen sowohl die Innen- als auch die Außenflächen von hohlen Glaskörpern eine Planarität von mindestens 95% und besser mindestens 98% auf. Bei einer idealen planaren Fläche liegen alle Punkte auf der Fläche auf der gleichen Ebene, d.h. die Planarität beträgt 100%. Liegen beispielsweise 5% der Punkte auf der Fläche außerhalb der gewünschten Ebene, so beträgt die Planarität 100 - 5 = 95%.

Werden (ggf. hohle) Glaskörper mit gekrümmt-planarer, rechteckiger, quadratischer oder anderen polygonaler Querschnittsform wiedergezogen, so weisen die jeweils gegenüberliegenden FlächenAbweichungen gegenüber der idealen Parallelität von kleiner 5%, bevorzugt kleiner 2% auf. Bevorzugt weisen die Innen- und die Außenflächen jeweils eine Abweichungen gegenüber der idealen Parallelität von kleiner 5%, beziehungsweise kleiner 2% auf. Bei idealer Parallelität ist das Verhältnis zwischen dem minimalen und maximalen senkrechten Abstand zwischen den ebenen starren Flächen 1, da der Abstand zwischen den Flächen an jedem Punkt gleich groß ist. Weicht die Parallelität von der idealen Parallelität ab, ist das Verhältnis zwischen dem maximalen senktrechten Abstand und dem minimalen senkrechten Abstand zwischen den annähernd ebenen starren Flächen zu bilden, wobei dieses Verhältnis wiederum in Relation zur idealen Parallelität (1 = 100%) gesetzt wird. D.h die Abweichung von der idealen Parallelität beträgt bei ideal parallelen Flächen 0%).

Die geformten, erstarrten Glaskörper können anschließend mit einer Messeinrichtung, vorzugsweise mit einer berührungslosen Messeinrichtung vermessen werden. Die Messdaten können einerseits dazu dienen, die Präzision der Querschnittsformmaße des geformten Glaskörpers zu überprüfen. Andererseits kann die Messeinrichtung auch dazu dienen, eine innerhalb einer bestimmten Länge des geformten Glaskörpers alternierende Querschnittsform zu überprüfen.

Eine Trenneinrichtung, z.B. eine Glasssäge, ein Schneidbrenner oder ein Laser, ermöglicht die Trennung des geformten Glaskörpers in konfektionierte Meterware mit gewünschter Länge. Vorzugsweise ist die Trenneinrichtung mit der Messeinrichtung verbunden, so dass beispielsweise Abschnitte mit fehlerhaften Querschnittsformen materialsparend entfernt werden können.

Der Trenneinrichtung kann eine Sortiereinrichtung folgen, die durch Weiterleitung der Messdaten der Messeinrichtung die konfektionierte Meterware nach gewünschtem Gesamtprofil und/oder den Maßen der Querschnittsform sortiert.

Die erfindungsgemäße Konzept ermöglicht die Herstellung von geformten Glaskörpern, deren Querschnittsformmaße eine prozentuale Abweichung des Ist-Werts gegenüber dem Soll-Wert von nur max. 5% betragen. Überraschenderweise wird diese hohe Präzision auch bei hohlen Glaskörpern mit dünnen Wandstärken, bevorzugt kleiner gleich 500 µm, weiter bevorzugt kleiner gleich 150 µm, erhalten. Somit werden bei gegenläufigen Effekten, d.h. hohe Präzision bei dünnen Wandstärken, im Falle oval-planarer, rechteckiger, quadratischer oder anderer polygonaler Querschnittsformen aufweisender hohler Glaskörper zudem noch eine besonders geringe Abweichung von jeweils gegenüberliegenden Flächen gegenüber der idealen Parallelität von kleiner gleich 5% erhalten. Außerdem werden die oval-planaren, rechteckigen, quadratischen oder anderen polygonale Querschnittsformen aufweisenden hohlen Glaskörper mit mindestens einer planaren Fläche einer Planarität von mindestens 95% erhalten.

Die erfindungsgemäß hergestellten Glaskörper sind besonders geeignet als Formsteg für Hohlräume in der gewünschten Geometrie in Formen im Metallguss oder können auch vorteilhaft als Probenröhrchen, Kapillaren, Küvetten in der Labortechnik verwendet werden, d.h. Bereiche, bei denen es besonder auf hohe Präzision und Feinheit der erhaltenen Glasstrukturen ankommt.

Kurzbeschreibung der Figuren:

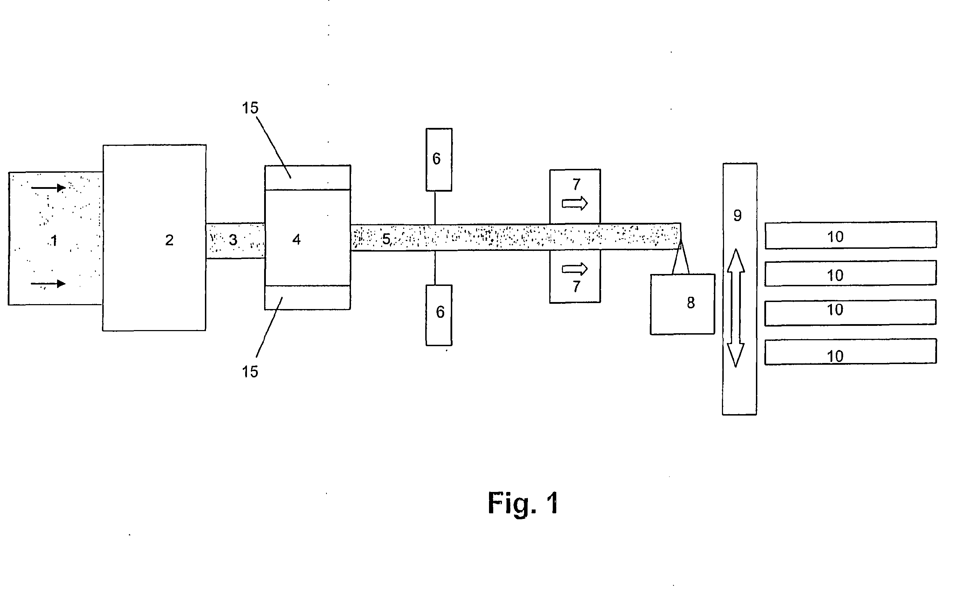

Fig. 1 ist ein Blockschema,das das erfindungsgemäße Verfahren und die erfindungsgemäße Vorrichtung in einer möglichen Ausführungsform veranschaulicht..

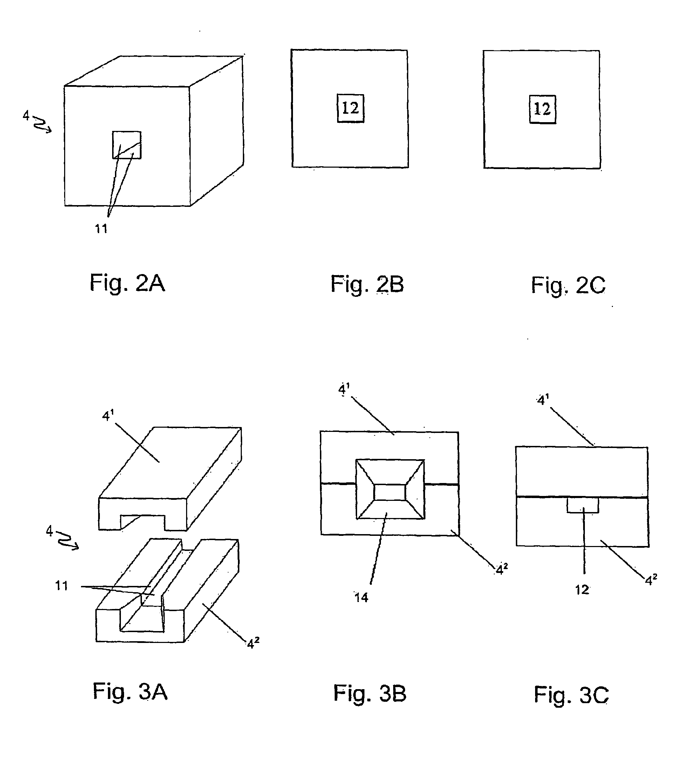

Fig. 2A ist eine perspektivische Ansicht einer einteiligen Ausführungsform einer formgebenden Einrichtung, die im Rahmen der Erfindung eingesetzt wird. Die Figuren 2B und 2C zeigen eine Draufsicht jeweils auf die Eintritts- und Austrittsöffnungen der formgebenden Einrichtung.
Fig. 3A ist eine perspektivische Ansicht einer zweiteiligen Ausführungsform einer formgebenden Einrichtung, die im Rahmen der Erfindung eingesetzt wird und einen konisch zulaufenden Eintrittsbereich aufweist. Die Figuren 3B und 3C zeigen eine Draufsicht jeweils auf die Eintritts- und Austrittsöffnungen der formgebenden Einrichtung.

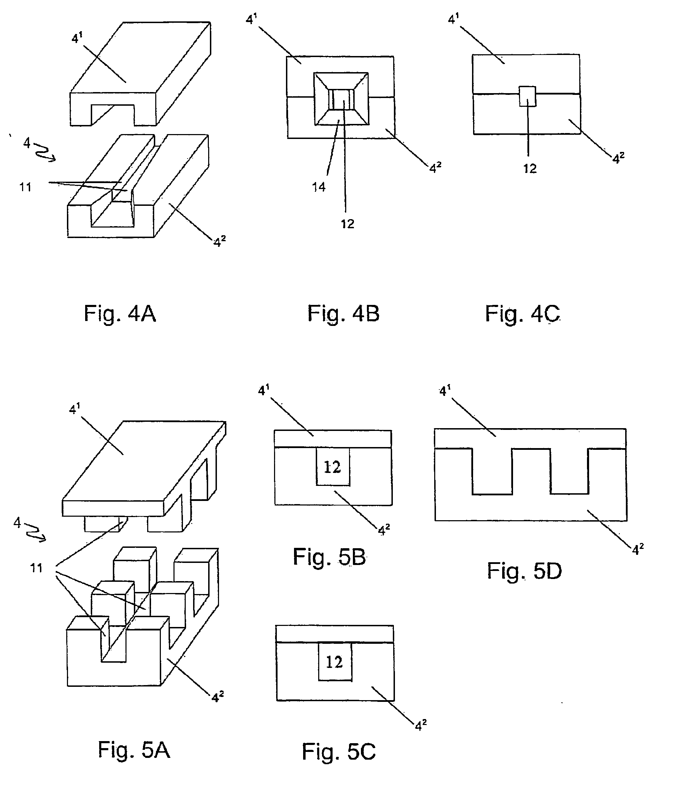

Fig. 4A ist eine perspektivische Ansicht einer weiteren zweiteiligen Ausführungsform einer formgebenden Einrichtung, die im Rahmen der Erfindung eingesetzt wird und die einen konisch zulaufenden Eintrittsbereich sowie einen leicht konisch zulaufenden Bereich von gegenüberliegenden starren Flächen zur Formgebung aufweist. Die Figuren 4B und 4C zeigen eine Draufsicht jeweils auf die Eintritts- und Austrittsöffnungen der formgebenden Einrichtung.
Fig. 5A ist eine perspektivische Ansicht einer weiteren zweiteiligen Ausführungsform einer formgebenden Einrichtung, die im Rahmen der Erfindung eingesetzt wird und die eine kammartige Verzahnung der zwei Teile in Ziehrichtung aufweist. Die Figuren 5B und 5C zeigen eine Draufsicht jeweils jeweils auf die Eintritts- und Austrittsöffnungen der formgebenden Einrichtung.
Die Figur 5D zeigt eine Seitenansicht der formgebenden Einrichtung.

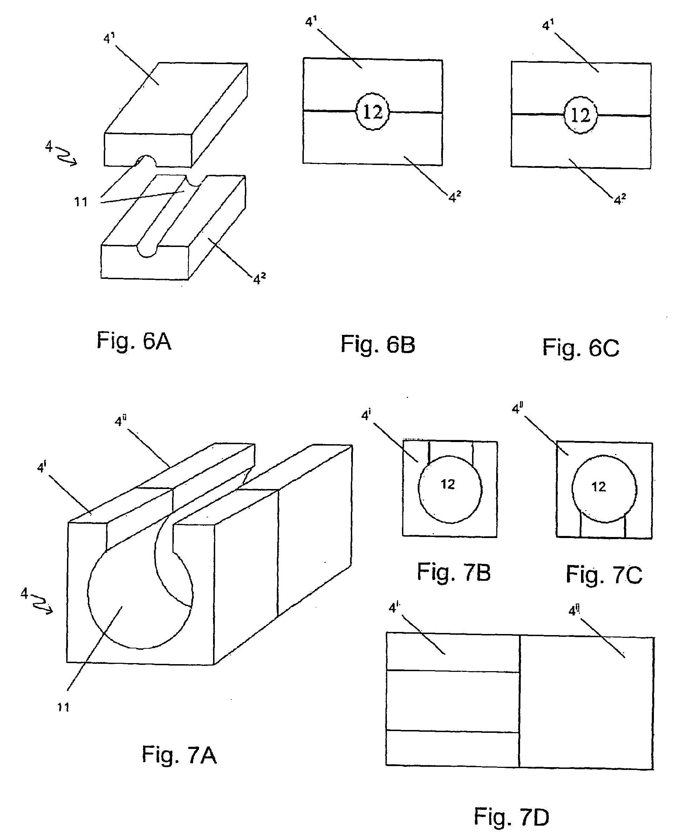

Fig. 6A ist eine perspektivische Ansicht einer weiteren zweiteiligen Ausführungsform einer formgebenden Einrichtung, die im Rahmen der Erfindung eingesetzt wird und die zwei aufeinanderzusetzende Blöcke aufweist. Die Figuren 6B und 6C zeigen eine Draufsicht jeweils auf die Eintritts- und Austrittsöffnungen der formgebenden Einrichtung.
Fig. 7A ist eine perspektivische Ansicht einer weiteren zweiteiligen Ausführungsform einer formgebenden Einrichtung, die im Rahmen der Erfindung eingesetzt wird und die in Längsrichtung in zwei Teile aufgeteilt ist, die gegenseitig verdrehbar sind und jeweils eine seitliche Einführungsöffnung aufweisen. Die Figuren 7B und 7C zeigen eine Draufsicht jeweils auf die Eintritts- und Austrittsöffnungen der formgebenden Einrichtung.
Die Figur 7D zeigt eine Seitenansicht der formgebenden Einrichtung.

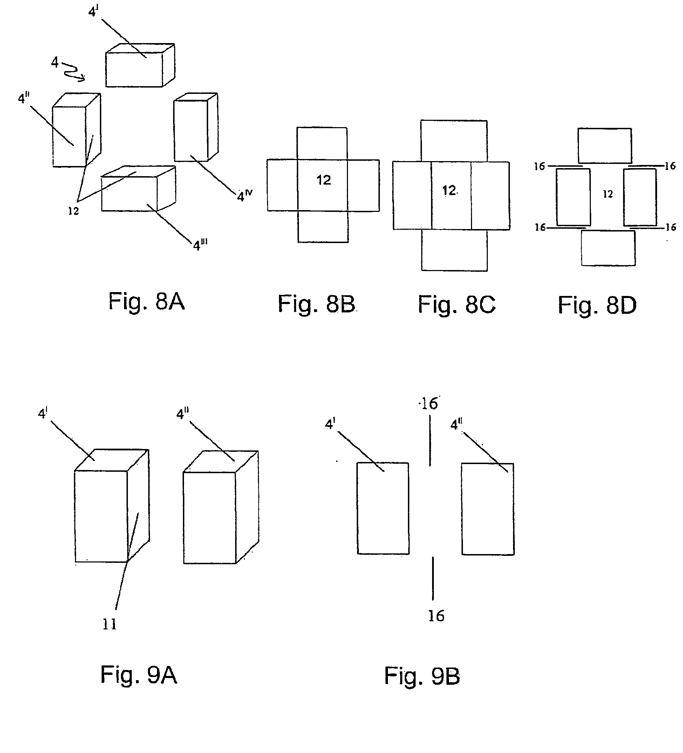

Fig. 8A ist eine perspektivische Ansicht einer vierteiligen Ausführungsform einer formgebenden Einrichtung, die im Rahmen der Erfindung eingesetzt wird, wobei die vier Teile variabel zueinander und voneinander weg in Position gebracht werden können. Fig. 8B zeigt eine Draufsicht auf eine beispielhafte Positionierungsmöglichkeit dieser formgebenden Einrichtung, die eine quadratische Querschnittsform definiert. Fig. 8C zeigt eine Draufsicht auf eine weitere Positionierungsmöglichkeit dieser formgebenden Einrichtung, die eine rechteckige Querschnittsform definiert. Fig. 8D zeigt eine Draufsicht auf eine weitere Positionierungsmöglichkeit dieser formgebenden Einrichtung, bei der sich vier Lücken bilden
Fig. 9A ist eine perspektivische Ansicht einer zweiteiligen Ausführungsform einer formgebenden Einrichtung, die im Rahmen der Erfindung eingesetzt wird, wobei die zwei Teile variabel zueinander und voneinander weg in Position gebracht werden können. Fig. 9B zeigt beispielhaft eine Draufsicht auf diese formgebende Einrichtung, die eine gekrümmt-planare Querschnittsform definiert.

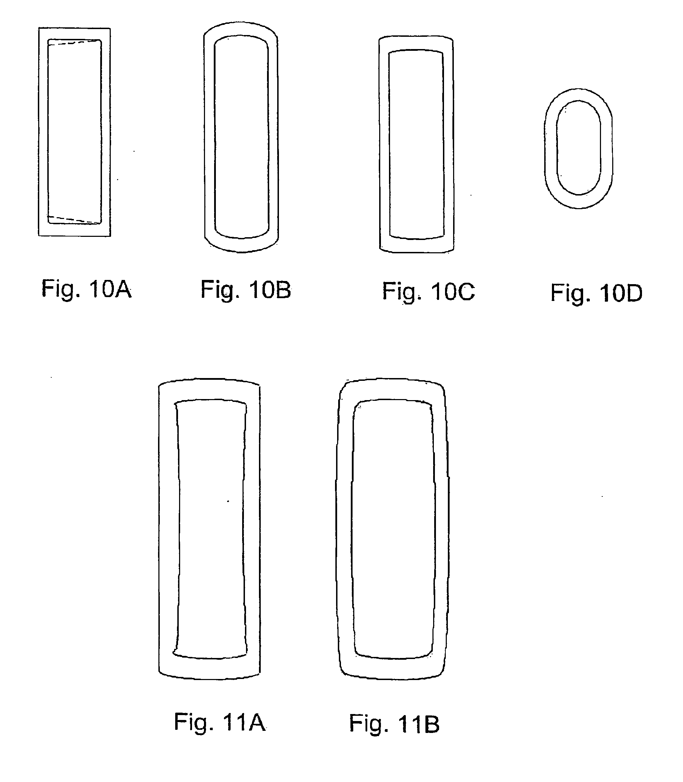

Fig. 10A, 10B, 10C und 10D zeigen Beispiele für mögliche Querschnittsformen eines mittels des erfindungsgemäßen Verfahrens wiedergezogenen rechteckigen Glaskörpers (die in Fig. 9A eingezeichnete gestrichelte Innenkontur jeweils an den kürzeren Seiten stellt nicht-erfindungsgemäße Abweichungen dar).
Fig. 11A und 11B zeigen Querschnittsformen von mittels konventionellen Wiederziehverfahren erhältlichen Glaskörpern.

Aus Fig. 1 ist ersichtlich, dass ein Glasrohling 1 in eine Heizeinrichtung 2 eingeführt wird (durch Pfeile angedeutet). Innerhalb der Heizeinrichtung 2 oder direkt im Anschluß daran bildet sich eine Ziehzwiebel dadurch, dass ein Glaskörper 3 mittels einer stromabwärts angeordneten Zieheinrichtung 7 schneller aus der Heizeinrichtung 2 wiedergezogen wird, als er in die erfindungsgemäße Vorrichtung eingeführt wird. Der wiedergezogene Glaskörper 3 weist somit eine Querschnittsform mit geringeren Maßen als der Glasrohling 1 auf. Anschließend passiert der wiedergezogene Glaskörper 3 eine formgebende Einrichtung 4, die eine interne oder externe Kühlung 15 aufweisen kann,auf eine Weise, dass Querschnittform und -maße des wiedergezogenen und geformten Glaskörpers 5 wie oben beschrieben und in den weiteren Figuren noch weiter beschrieben exakt definiert werden. Anschließend wird der geformte Glaskörper durch eine Messeinrichtung 6 vermessen. Die Trenneinrichtung 8 ermöglicht das Trennen des wiedergezogenen und geformten Glaskörpers 5 in konfektionierte Meterware 10, die durch eine Sortiereinrichtung 9 nach den Maßen der Querschnittsform und/oder dem gewünschten Gesamtprofil der konfektionierten Meterware 10 sortiert werden kann. Statt der horizontalen Anordnung der Einrichtungen 1 bis 9 der Wiederziehvorrichtung können die Einrichtungen 1 bis 9 auch in anderen Richtungen, zum Beispiel vertikal, angeordnet sein.
Fig. 2A zeigt eine einteilige formgebende Einrichtung 4, die je nach Gestaltung der Hohlformgeometrie eine quadratische (wie gezeigt) oder eine rechteckige Querschnittsform für den wiedergezogenen Glaskörper ermöglicht. Die quadratische oder rechteckige Hohlform definiert die quadratische Querschnittsform bzw. die entsprechende Außenkontur eines wiedergezogenen Glaskörpers 5. Aus den Figuren 2B und 2C ist ersichtlich, dass die Eintrittsöffnung (s. Fig. 2B) der formgebenden Einrichtung mit der Austrittsöffnung (s. Fig. 2C) identisch ist. Statt quadratischen oder rechteckigen Querschnittsformen der formgebenden Einrichtung und somit der geformten Glaskörper 3 können auch beliebige andere Formen gewählt werden, bzw. andere polygonale Formen, kreisrunde Formen oder Teilformen der genannten geometrischen Gestaltung.
Fig. 3A zeigt eine zweiteilige formgebende Einrichtung 4, die je nach Gestaltung der Hohlformgeometrie eine rechteckige oder andere Querschnittsform für den wiedergezogenen Glaskörper ermöglicht. Die formgebende Einrichtung 4 weist ein Teil 4², das drei starre Flächen 11 und einen unteren Bereich der Eintrittsöffnung 14 bildet, und ein Teil 4¹, das den oberen Bereich der Eintrittsöffnung 14 und eine starre Fläche 11 bildet, auf. Die formgebende Einrichtung weist im zusammengesetzten Zustand eine Eintrittsöffnung 14 auf, die das Einführen des Glaskörpers 3 in die Form erleichtert, während die starren Flächen 11 letztlich die rechteckige Querschnittsform festlegen, die die in Bezug auf den wiedergezogenen Glaskörper aufprägende Form definiert. Daraus ergibt sich, das wie in den Figuren 3B und 3C gezeigt, die Eintrittsöffnung (s. Fig. 3A) größer dimensioniert ist als die Austrittsöffnung (s. Fig. 3C).
Fig. 4A zeigt eine zweiteilige formgebende Einrichtung 4, die je nach Gestaltung der Hohlformgeometrie eine rechteckige (wie gezeigt) oder eine andere polygonale oder sogar kreisrunde Querschnittsform für den wiedergezogenen Glaskörper ermöglicht. Die formgebende Einrichtung 4 weist ein Teil 4², das drei starre Teilflächen 11 und einen Bereich der Eintrittsöffnung 14 bildet, und ein Teil 4¹, das den übrigen Bereich der Eintrittsöffnung 14 und seinerseits drei starre Teilflächen 11 bildet, auf. Die formgebende Einrichtung weist im zusammengesetzten Zustand eine Eintrittsöffnung 14 auf, die das Einführen eines Glaskörpers in die Form erleichtert. Die starren Flächen 11 definieren im zusammengesetzten Zustand der Form die rechteckige Querschnittsform, wobei in dieser Ausführungform ein gegenüberliegendes Paar der starren Flächen über die restliche Länge der formgebenden Einrichtung aufeinander zuläuft, so dass die der Eintrittsöffnung 14 folgenden Öffnung 12 (s. Fig. 4A) breiter ist als die Austrittsöffnung (s. Fig. 4C). Es ist auch denkbar, dass mehr als 2 starre Flächen, z.B. alle gegenüberliegenden Seitenflächen, in Längsrichtung unabhängig voneinander aufeinander zulaufen.
Fig. 5A zeigt eine zweiteilige formgebende Einrichtung), die je nach Gestaltung der Hohlformgeometrie eine rechteckige (wie gezeigt) oder eine andere Querschnittsform für den wiedergezogenen Glaskörper ermöglicht. Die formgebende Einrichtung 4 ist unterteilt in zwei längsseitig rechteckige Verzahnungen aufweisenden Teilen 4¹ und 4², die zueinander komplementär sind und nach Zusammenbau in Eingriff stehen. Im zusammengesetzten Zustand bildet die Form durchgehende starre Flächen 11, die z.B. eine rechteckige Querschnittsform definieren, wobei aber auch ohne weiteres andere Querschnittsformen realisierbar sind. Aus den Figuren 5B und 5C ist ersichtlich, dass in dieser Ausführungsform die Eintrittsöffnung (s. Fig. 5A) mit der Austrittsöffnung identisch ist. Die Seitenansicht (s. Fig. 5D) zeigt die längsseitige Verzahnung. Die längsseitige Verzahnung hat den Vorteil, dass eine durchgehende Naht im geformten Glaskörper sicher verhindert wird, die durch einen eventuell vorhandenen Spalt zwischen zwei geradlinigen Formteilen 4¹ und 4² entstehen könnte. Um ein besonders präzises Zusammensetzen der Teile 4¹ und 4² zu realisieren, können darüber hinaus auch in der Querrichtung Verzahnungen oder andere Arretierungsmöglichkeiten bereitgestellt werden.
Fig. 6A zeigt eine zweiteilige formgebende Einrichtung (4), die eine runde Querschnittsform für den wiedergezogenen Glaskörper ermöglicht. Die formgebende Einrichtung (4) besteht aus zwei symmetrischen Teilen. Nach Zusammenbaus der Teile ergibt sich eine starre Fläche (11), die die runde Querschnittsform definiert. Aus den Figuren 6B und 6C ist ersichtlich, dass die Eintrittsöffnung (s. Fig. 6B) der formgebenden Einrichtung mit der Austrittsöffnung (s. Fig. 6C) identisch ist. Es ist aber auch denkbar, dass die kreisrunde Hohlform in Längsziehrichtung konisch zuläuft und somit Eintrittsöffnung und Austrittsöffnung relativ größere bzw. relativ kleinere Durchmesser aufweisen.
Fig. 7A zeigt eine zweiteilige formgebende Einrichtung (4), die zum Beispiel eine runde Querschnittsform für den wiedergezogenen Glaskörper ermöglicht. Die formgebende Einrichtung (4) ist unterteilt in zwei in Längsrichtung hintereinander positionierten Teilen (4ⁱ, 4ⁱⁱ), die gegeneinander drehbar sind. Auf diese Weise können auch mehr als zwei Teile hintereinander gegeneinander verdrehbar positioniert werden. Bei der gezeigten Ausführungsform kann ein wiedergezogener Glaskörper über eine seitliche Einführungsöffnung in die formgebende Einrichtung eingelegt werden. Durch Drehen eines oder beider Teile, z.B. Drehung von Teil 4ⁱⁱ um 180° (vgl. Fig 7B und 7C) wird der eingelegte wiedergezogene Glaskörper in der Form gehalten, und die starren Flächen 11 der Teile (4ⁱ, 4ⁱⁱ) bilden über die Länge der formgebenden Einrichtung insgesamt einen runden Querschnitt. Fig. 7D zeigt die Seitenansicht der formgebenden Einrichtung, bei der Teil 4ⁱⁱ um 90°, 180° oder 270° gedreht sein kann.

Die in Fig. 8A schematisch dargestellte formgebende Einrichtung setzt sich aus vier quaderförmigen Bestandteilen (4^{I}, 4^{II}, 4^{III} und 4^{IV}) zusammen. Dabei können die quaderförmigen Bestandteile so zueinander positioniert werden, dass das Innenprofil der formgebenden Einrichtung quadratisch (s. Fig. 8B) oder beliebig rechteckig (s. Fig. 8C) ist. Die in Fig. 8D beispielhaft gezeigte Positionierung der vier quaderförmigen Bestandteile (4^{I}, 4^{II}, 4^{III} und 4^{IV}) weist vier Lücken 16 auf, wodurch das Bilden eines wiedergezogenen Glaskörpers mit rechteckartiger, gekrümmt-planarer Querschnittsform ermöglicht wird.

In den oben beschriebenen Ausführungsformen sind Dimension und Innenprofil der Hohlform der formgebenden Einrichtung (4) so bemessen, dass das wiedergezogene Glas, das in noch verformbarem Zustand in die formgebende Einrichtung (4) eintritt, die starren Flächen (11) kontaktiert, dabei innerhalb der formgebenden Einrichtung (4) erstarrt und als wiedergezogener und geformter Glaskörper (5) aus der formgebenden Einrichtung austritt.

Die in Fig. 9A schematisch dargestellte formgebende Einrichtung setzt sich aus zwei quaderförmigen Bestandteilen (4^{I}, 4^{II}) zusammen. Dabei können die quaderförmigen Bestandteile so zueinander positioniert werden, dass die beiden gegenüberliegenden starren Flächen der formgebenden Einrichtung parallel zueinander angeordnet sind (s. Fig. 9B). Diese Positionierung weist zwei Lücken 16 auf, wodurch das Bilden eines wiedergezogenen Glaskörpers mit gekrümmt-planarer Querschnittsform, die zwei stark gekrümmte kurze Seiten aufweist, ermöglicht wird.

In den oben beschriebenen Ausführungsformen sind Dimension und Innenprofil der Hohlform der formgebenden Einrichtung (4) so bemessen, dass das wiedergezogene Glas, das in noch verformbarem Zustand in die formgebende Einrichtung (4) eintritt, die starren Flächen (11) kontaktiert, dabei innerhalb der formgebenden Einrichtung (4) erstarrt und als wiedergezogener und geformter Glaskörper (5) aus der formgebenden Einrichtung austritt.

Die in Fig. 10A dargestellte rechteckige Querschnittsform 13 eines mittels des erfindungsgemäßen Verfahrens wiedergezogenen und geformten Glaskörpers veranschaulicht die ausgezeichnete Planarität sowohl von Innen- als auch Außenflächen, und die präzise Parallelität der jeweils gegenüberliegende Flächen. Eine derartige Querschnittform wird erhalten, wenn vier starre Flächen einer formgebenden Einrichtung ein rechteckförmiges Innenprofil bilden, das den Glaskörper vollständig umfasst. Die gestrichelt gezeichneten Linien deuten Abweichungen von Planarität und Parallelität an, wie sie ohne Beachtung der erfindungsgemäßen Verfahrensweise auftreten können. Fig. 10B zeigt eine gekrümmt-planare Querschnittsform eines mittels des erfindungsgemäßen Verfahrens wiedergezogenen und geformten Glaskörpers. Eine derartige Querschnittsform wird erhalten, wenn die formgebende Einrichtung lediglich zwei sich gegenüberliegende, z.B. parallele starre Flächen aufweist, also den Glaskörper nicht vollständig umschließt, sondern zwei Lücken aufweist. In diesem Fall weisen die beiden gegenüberliegenden Flächen des wiedergezogenen und geformten Glaskörpers ebenfalls präzise Planarität und Parallelität auf. Die gekrümmten kurzen Seitenflächen entstehen dadurch, dass der wiedergezogene Glaskörper über die in Ziehrichtung liegenden Lücken der Deformation durch die starren Flächen ausweichen kann. Die in Fig. 10C dargestellte Querschnittsform 13 mit gekrümmten Ecken, ansonsten aber planaren Seitenflächen, die einen weiteren mittels des erfindungsgemäßen Verfahrens wiedergezogenen und geformten Glaskörpers darstellt, wird erhalten, wenn die formgebende Einrichtung vier starre Flächen aufweist, von denen sich je zwei gegenüberliegen, wobei sich die in Ziehrichtung befindlichen Längsseiten der beiden Paare gegenüberliegender starrer Flächen nicht berühren, sondern vier Lücken bilden, über die der wiedergezogene Glaskörper der Deformation durch die starren Flächen ausweichen kann, wodurch sich die gekrümmten Ecken bilden. Die sich gegenüberliegenden ebenen Flächen weisen erfindungsgemäß eine geringe Abweichung von idealer Planarität und Parallelität auf. Die in Fig. 10D dargestellte Querschnittsform 13 mit stark gekrümmten kurzen Seiten, ansonsten aber planaren langen Seitenflächen, die einen weiteren mittels des erfindungsgemäßen Verfahrens wiedergezogenen und geformten Glaskörpers darstellt, wird erhalten, wenn die formgebende Einrichtung zwei starre Flächen aufweist, sie sich gegenüberliegen, wodurch sich zwei Lücken bilden, über die der wiedergezogene Glaskörper der Deformation durch die starren Flächen ausweichen kann, wodurch sich die stark gekrümmten kurzen Seiten bilden. Die sich gegenüberliegenden ebenen Flächen weisen erfindungsgemäß eine geringe Abweichung von idealer Planarität und Parallelität auf.

In den Vergleichsdarstellungen von Fig. 11A und 11B, die Querschnittsformen 13 von Glaskörpern zeigen, weisen die kurzen und die langen Seitenflächen der Querschnittsform des Glaskörpers starke Abweichungen von der Planarität und Parallelität auf. So können sich die Innenflächen der langen Seitenflächen beispielsweise nach innen wölben (s. Fig. 11A) oder sowohl die Innen- als auch die Außenflächen sich nach außen wölben (s. Fig. 11B). Die in den Figuren 11A und 11B gezeigten Querschnittsformen kommen zum Beispiel dann zustande, wenn das Glas während des formgebenden Schritts plastisch relativ stark verformbar ist und auch nach dem Formen noch plastisch verformbar ist, so dass es sich anschließend noch ausdehnen oder kontrahieren kann.

Die in den Figuren gezeigten Ausführungsformen sind beispielhafte Darstellungen der erfindungsgemäßen Gegenstände. Die Merkmale der gezeigten Ausführungsformen können auch untereinander kombiniert werden.

## Patentansprüche

1. Verfahren zur Herstellung von Glaskörpern (5, 10) mittels Wiederziehverfahren, bei dem ein Glaskörper (1) nach dem Schritt des Erhitzens wiedergezogen wird und in noch verformbarem Zustand in eine formgebende Einrichtung (4) eingeführt wird, wobei Maße des wiedergezogenen Glaskörpers (3) durch zumindest abschnittsweisen flächigen Kontakt mit mindestens einer starren Fläche (11) der formgebenden Einrichtung (4) auf einer sich längs in Ziehrichtung erstreckenden Strecke definiert werden, wobei dem verformbaren Glaskörper in seinen Außenmaßen die Form der starren Fläche(n) (11), indem und soweit ein flächiger Kontakt stattfindet, exakt aufgezwungen oder aufgeprägt wird, wobei der wiedergezogene Glaskörper (3) die mindestens eine starre Fläche (11) der formgebenden Einrichtung (4) auf einer Streckenlänge durchläuft, die so bemessen ist, dass der anfangs noch verformbare wiedergezogene Glaskörper (3) beim Austritt in erstarrter, nicht mehr verformbarer Form vorliegt.

2. Verfahren gemäß Anspruch 1, **gekennzeichnet durch** jeweils eine oder eine Kombination der folgenden Bedingung(en) a) bis e):
a) **durch** geometrische Gestaltung eines Innenprofils der formgebenden Einrichtung (4), in die der wiedergezogene Glaskörper (3) in noch verformbarem Zustand eingeführt wird, wird die Querschnittsform (13) eines gewünschten Glaskörpers (5, 10) eingestellt;
b) die mindestens eine starre Fläche (11) der formgebenden Einrichtung (4) umschließt den wiedergezogenen Glaskörper (3) vollständig;
c) die formgebende Einrichtung (4) ist aus mehreren Teilen zusammengesetzt, die nach ihrem Zusammenbau oder ihrem Positionieren die mindestens eine starre Fläche (11) bilden, welche die Außenmaße des wiedergezogenen und geformten Glaskörpers (5) bestimmt;
d) zumindest für die mindestens eine starre Fläche (11) der formgebenden Einrichtung (4), die den wiedergezogenen Glaskörper (3) kontaktiert, wird Graphit, Kohle, Quarzkohle, Keramik, Bornitrid, Quarzglas oder ein Metall als Material verwendet;
e) die Position der formgebenden Einrichtung (4) wird so gewählt, dass der wiedergezogene Glaskörper (3) nach Austritt aus der Heizeinrichtung (2) in verformbarem Zustand und vor dem Erstarren in die formgebende Einrichtung (4) eingeführt wird.

3. Verfahren gemäß einem der vorangehenden Ansprüche, **dadurch gekennzeichnet, dass** der wiedergezogene Glaskörper (3) in dem Bereich, in dem er durch die formgebende Einrichtung (4) geführt wird, oder in einem Teilbereich davon gekühlt wird.

4. Verfahren gemäß einem der vorangehenden Ansprüche, **gekennzeichnet durch** jeweils eine oder eine Kombination der folgenden Bedingung(en) (i) bis (iv):
(i) es werden hohle Glaskörper (5, 10) wiedergezogen und erhalten, deren Wandstärken kleiner gleich 500 µm betragen, bevorzugt kleiner gleich 150 µm;
(ii) es werden hohle Glaskörper (5, 10) mit einem gekrümmt-planaren oder polygonalen Querschnittsform wiedergezogen und erhalten, die mindestens 1 Seitenfläche einer Planarität von mindestens 95% aufweisen;
(iii) es werden eine gekrümmt-planare Querschnittsform aufweisende hohle Glaskörper (5, 10) wiedergezogen und erhalten, deren Ecken gekrümmt sind;
(iv) es werden hohle Glaskörper (5, 10) mit einem gekrümmt-planaren oder polygonalen Querschnittsform wiedergezogen und erhalten, deren jeweils gegenüberliegende mindestens zwei Flächen Abweichungen gegenüber der idealen Parallelität von kleiner 5% aufweisen.

5. Verfahren zur Herstellung von Glaskörpern (5, 10) gemäß Anspruch 1, **dadurch gekennzeichnet, dass** am Ende der sich erstreckenden, mindestens einen starren Fläche (11) das Glas sich in formstarrem Zustand befindet.

6. Vorrichtung zum Wiederziehen von Glasrohlingen (1), umfassend:
- eine Zufuhreinrichtung (1), welche den Glasrohling (1) zuführt,
- eine Heizeinrichtung (2) zum Erweichen des Glasrohlings (1),
- eine nach der Heizeinrichtung (2) angeordnete Zieheinrichtung (7), die das Wiederziehen des Glasrohlings (1) zum wiedergezogenen Glaskörper (3) ermöglicht,
- eine formgebende Einrichtung (4) mit mindestens einer starren Fläche (11), die im Bezug auf die Heizeinrichtung (2) stromabwärts angeordnet ist und die so ausgebildet ist, dass die mindestens eine starre Fläche (11) mit dem wiedergezogenen Glaskörper (3) in noch verformbarem Zustand derart flächig kontaktierbar ist, dass die mindestens eine starre Fläche Maße der Querschnittsform des wiedergezogenen Glaskörpers (3) mindestens abschnittsweise definiert, wobei die formgebende Einrichtung (4) darauf angepasst ist,
dass dem verformbaren Glaskörper (3) in seinen Außenmaßen die Form der starren Flächen, indem und soweit ein flächiger Kontakt stattfindet, exakt aufzwingbar bzw. aufprägbar ist, und dass die mindestens eine starre Fläche (11) der formgebenden Einrichtung (4) in der Streckenlänge so bemessen ist, dass der anfangs noch verformbare wiedergezogene Glaskörper (3) beim Austritt in erstarrter, nicht mehr verformbarer Form vorliegt.

7. Vorrichtung gemäß Anspruch 6, **gekennzeichnet durch** jeweils eine oder eine Kombination der folgenden Merkmale (x) bis (z):
(x) die formgebende Einrichtung (4) weist mehrere Teile (4¹, 4²; 4ⁱ, 4ⁱⁱ; 4^{I}, 4^{II}, 4^{III}, 4^{IV}) auf;
(y) zumindest die mindestens eine starre Fläche (11) der formgebenden Einrichtung (4) weist (eine) Oberfläche(n) aus Graphit, Kohle, Keramik, Bornitrid oder Quarzglas auf;
(z) die Vorrichtung umfasst ferner eine Kühlungseinrichtung (15), mit der die formgebende Einrichtung (4) oder ein Bereich davon kühlbar ist.

8. **Durch** Wiederziehen geformter Glashohlkörper (5, 10), **dadurch gekennzeichnet, dass** die durch Wiederziehen erhaltene Wandstärke kleiner gleich 150 µm ist, und dass mindestens eine Seitenfläche des durch Wiederziehen erhaltenen Glaskörpers eine Querschnittsform in Form eines polygonalen Profils eine Planarität von mindestens 95% aufweist.

9. Durch Wiederziehen geformter Glashohlkörper (5, 10) gemäß Anspruch 8, erhältlich durch das Verfahren nach Anspruch 1 bis 5.

10. Durch Wiederziehen geformter Glashohlkörper (5, 10) gemäß einem der Ansprüche 8 bis 9, **dadurch gekennzeichnet, dass** eine Querschnittsform in Form eines gekrümmt-planaren oder polygonalen Profils eine Parallelität aufweist, bei der jeweils gegenüberliegende Flächen eine Abweichung von weniger als 5% gegenüber der idealen Parallelität aufweisen.

11. Verwendung eines Glashohlkörpers gemäß Anspruch 8 als Formsteg für Hohlräume in einer gewünschten Geometrie in Metallguss-Formen.

12. Verwendung eines Glashohlkörpers gemäß Anspruch 8 als Probenröhrchen oder Küvette in der Labortechnik.

## Claims

1. Process for preparing glass bodies (5, 10) by means of redrawing method, in which a glass body (1) is redrawn subsequent to a step of heating and is inserted into a shaping device (4) in a still deformable state, wherein dimensions of the redrawn glass body (3) are defined by at least sectional, areal contact with at least one rigid surface area (11) of the shaping device (4) in an extension extending longitudinally in drawing direction, wherein the shape of the rigid surface area(s) (11) is precisely imposed on or impressed on the deformable glass body in its external dimensions by and insofar as an areal contact takes place, wherein the redrawn glass body (3) passes the at least one rigid surface area (11) of the shaping device (4) on an extension length dimensioned such that the initially still deformable redrawn glass body (3) upon exit is in solidified, no longer deformable shape.

2. Process according to claim 1, characterized respectively by one or a combination of the following condition(s) a) to e) :
a) the cross-sectional shape (13) of a desired glass body (5, 10) is set by geometrical design of an internal profile of the shaping device (4) into which the redrawn glass body (3) is inserted in a still deformable state;
b) the at least one rigid surface area (11) of the shaping device (4) completely encloses the redrawn glass body (3);
c) the shaping device (4) is composed of multiple parts which - after their assembly or their positioning - form the at least one rigid surface area (11) which defines the external dimensions of the redrawn and formed glass body (5);
d) at least for the at least one rigid surface area (11) of the shaping device (4) contacting the redrawn glass body (3), graphite, coal, quartz coal, ceramic, boron nitride, quartz glass or a metal is used as material;
e) the position of the shaping device (4) is selected such that the redrawn glass body (3), upon exiting the heating device (2), is in deformable state and is inserted into the shaping device (4) prior to solidification.

3. Process according to one of the preceding claims, **characterized in that** the redrawn glass body (3) is cooled within the region in which it is carried through the shaping device (4), or in a sub-region thereof.

4. Process according to one of the preceding claims, characterized respectively by one or a combination of the following condition(s) (i) to (iv):
(i) hollow glass bodies (5, 10) are redrawn and obtained, which wall thicknesses are less than or equal to 500 µm, preferably less than or equal to 150 µm;
(ii) hollow glass bodies (5, 10) having a curved-planar or polygonal cross-sectional shape, are redrawn and obtained, which have at least 1 lateral surface of a planarity of at least 95%;
(iii) hollow glass bodies (5, 10) having a curved-planar cross-sectional shape are redrawn and obtained which edges are curved;
(iv) hollow glass bodies (5, 10) having a curved-planar or polygonal cross-sectional shape are redrawn and obtained, which respectively opposing at least two areas have deviations from the ideal parallelity of smaller than 5%.

5. Process for preparing glass bodies (5, 10) according to claim 1, **characterized in that** at least at the end of the extending, at least one rigid surface area (11), the glass is in a rigid-shaped state.

6. Apparatus for redrawing glass blanks (1), comprising:
- a loading device (1), which loads the glass blank (1),
- a heating device (2) for softening the glass blank (1),
- a drawing device (7) arranged downstream to the heating device (2), which renders possible the redrawing of the glass blank (1) to a redrawn glass body (3),
- a shaping device (4) having at least one rigid surface area (11) which is arranged downstream with respect to the heating device (2) and is formed such that the at least one rigid surface area (11) is contactable with the redrawn glass body (3) in a still deformable state in an areal manner such that the at least one rigid surface area at least sectionally defines dimensions of the cross-sectional shape of the redrawn glass body (3), wherein the shaping device (4) is adapted such that the shape of the rigid surface areas is exactly imposeable on or impressible on the deformable glass body (3) in its external dimensions by and insofar as a areal contact takes place, and that the at least one rigid surface area (11) of the shaping device (4) is dimensioned in an extension length such that the initially still deformable redrawn glass body (3) upon exit is no longer in deformable form.

7. Apparatus according to claim 6, characterized respectively by one or a combination of the following features (x) to (z):
(x) the shaping device (4) has a plurality of parts (4¹, 4²; 4ⁱ, 4ⁱⁱ, 4^{I}, 4^{II}, 4^{III}, 4^{IV}) ;
(y) at least one of the at least one rigid surface area (11) of the shaping device (4) has (one) surface(s) of graphite, coal, ceramic, boron nitride or quartz glass;
(z) the apparatus further comprises a cooling device (15) by means of which the shaping device (4) or an area thereof is coolable.

8. Hollow glass body formed by means of redrawing (5, 10), **characterized in that** the wall thickness obtained by means of redrawing is less than or equal to 150 µm, and that at least one lateral surface of the glass body obtained by means of redrawing has a cross-sectional shape in the form of a polygonal profile having a planarity of at least 95%.

9. Hollow glass body formed by means of redrawing (5, 10) according to claim 8, obtainable by a process according to claim 1 to 5.

10. Hollow glass body formed by means of redrawing (5, 10) according to one of claims 8 to 9, **characterized in that** a cross-sectional shape in the form of a curved-planar or polygonal profile has a parallelity at which respectively opposing areas have a deviation of less than 5% compared to the ideal parallelity.

11. Use of a hollow glass body according to claim 8 as a mould ridge in metal casting moulds for hollow spaces in a desired geometry.

12. Use of a hollow glass body according to claim 8 as sample tube or cuvette in laboratory technology.

## Revendications

1. Procédé de fabrication de corps en verre (5, 10) par un processus de ré-étirage, dans lequel un corps en verre (1) est ré-étiré après l'étape de chauffage et est introduit à l'état encore déformable dans un dispositif de façonnage (4), dans lequel les dimensions du corps en verre ré-étiré (3) sont définies par contact à plat au moins par sections avec au moins une surface rigide (11) du dispositif de façonnage (4) sur un parcours s'étendant longitudinalement dans la direction d'étirage, dans lequel on presse ou on imprime exactement au corps en verre déformable dans ses dimensions externes la forme de la ou des surfaces rigides (11) en faisant en sorte et pour autant que se fasse un contact à plat, dans lequel le corps en verre ré-étiré (3) parcourt la au moins une surface rigide (11) du dispositif de façonnage (4) sur une longueur de parcours qui est telle que le corps en verre ré-étiré (3) au début encore déformable se présente à la sortie sous une forme consolidée qui n'est plus déformable.

2. Procédé selon la revendication 1, **caractérisé par** respectivement une condition ou une combinaison de conditions suivantes a) à e) :
a) la forme en coupe transversale (13) d'un corps en verre souhaité (5, 10) est réglée par configuration géométrique d'un profil interne du dispositif de façonnage (4), dans lequel le corps en verre (3) ré-étiré est introduit à l'état encore déformable ;
b) la au moins une surface rigide (11) du dispositif de façonnage (4) entoure complètement les corps en verre ré-étirés (3) ;
c) le dispositif de façonnage (4) est composé de plusieurs parties qui forment, en fonction de leur assemblage ou de leur positionnement, la au moins une surface rigide (11), qui détermine les dimensions externes du corps en verre (5) ré-étiré et façonné ;
d) au moins pour la au moins une surface rigide (11) du dispositif de façonnage (4), qui vient en contact avec les corps en verre (3) ré-étirés, on utilise du graphite, du charbon, du charbon quartzeux, de la céramique, du nitrure de bore, du verre quartzeux ou un métal comme matériau ; et
e) la position du dispositif de façonnage (4) est choisie de sorte que le corps en verre ré-étiré (3) soit introduit dans le dispositif de façonnage (4) à la sortie du dispositif de chauffage (2) à l'état déformable et avant la consolidation.

3. Procédé selon l'une quelconque des revendications précédentes, **caractérisé en ce que** le corps en verre ré-étiré (3) est refroidi dans la zone dans laquelle il est guidé à travers le dispositif de façonnage (4) ou dans une zone partielle de celui-ci.

4. Procédé selon l'une quelconque des revendications précédentes, **caractérisé par**, respectivement, une condition ou une combinaison des conditions suivantes (i) à (iv) :
i) on ré-étire et l'on obtient des corps en verre creux (5, 10), dont les épaisseurs de paroi sont plus petites ou égales à 500 µm, de préférence plus petites ou égales à 150 µm ;
ii) on ré-étire et on obtient des corps en verre creux (5, 10) avec une forme en coupe transversale de type plan-courbe ou polygonal, qui présentent au moins une face latérale d'une planarité d'au moins 95 % ;
iii) on ré-étire et on obtient un corps en verre creux (5, 10) présentant une forme en coupe transversale de type plan-courbe, dont les angles sont courbés ;
iv) on ré-étire et on obtient des corps en verre creux (5, 10) avec une forme en coupe transversale de type plan-courbe ou polygonal dont respectivement au moins deux surfaces opposées présentent des écarts vis-à-vis du parallélisme idéal de moins de 5 %.

5. Procédé de fabrication de corps en verre (5, 10) selon la revendication 1, **caractérisé en ce que** le verre se trouve à l'état indéformable à la fin de la au moins une surface rigide allongée (11).

6. Dispositif de ré-étirage d'ébauches de verre (1), comprenant :
- un dispositif d'alimentation (1) qui achemine l'ébauche de verre (1),
- un dispositif de chauffage (2) pour ramollir l'ébauche de verre (1),
- un dispositif d'étirage (7) aménagé après le dispositif de chauffage (2) et qui permet le ré-étirage de l'ébauche de verre (1) en corps en verre ré-étiré (3),
- un dispositif de façonnage (4) avec au moins une surface rigide (11), qui est aménagée en aval par rapport au dispositif de chauffage (2) et qui est conformée de sorte que la au moins une surface rigide (1) puisse venir en contact à l'état encore déformable à plat de sorte que la au moins une surface rigide définisse les dimensions de la forme en coupe transversale du corps en verre ré-étiré (3) au moins par sections, le dispositif de façonnage (4) étant adapté de manière que la forme des surfaces rigides puisse être exactement pressée ou imprimée dans ses dimensions externes en faisant en sorte et pour autant que se fasse un contact à plat, et de sorte que la au moins une surface rigide (11) du dispositif de façonnage (4) soit dimensionnée dans la longueur du parcours de sorte que le corps en verre (3) ré-étiré encore déformable au départ se retrouve à la sortie sous une forme consolidée qui n'est plus déformable.

7. Dispositif selon la revendication 6, **caractérisé par**, respectivement, une caractéristique ou une combinaison des caractéristiques suivantes (x) à (z) :
(x) le dispositif de façonnage (4) présente plusieurs parties (4¹, 4² ; 4ⁱ, 4ⁱⁱ ; 4^{I}, 4^{II}, 4^{III}, 4^{IV}) ;
(y) au moins la au moins une surface rigide (11) du dispositif de façonnage (4) présente une ou des surfaces en graphite, en charbon, en céramique, en nitrure de bore ou en verre quartzeux ; et
(z) le dispositif comprend en outre un dispositif de refroidissement (15) avec lequel le dispositif de façonnage (4) ou une zone de celui-ci peut être refroidi (e) .

8. Corps creux en verre (5, 10) formé par ré-étirage, **caractérisé en ce que** l'épaisseur de paroi obtenue par ré-étirage est plus petite ou égale à 150 µm et **en ce que** au moins une surface latérale du corps en verre obtenu par ré-étirage présente une forme en coupe transversale en profil polygonal d'une planarité d'au moins 95 %.

9. Corps creux en verre (5, 10) formé par ré-étirage selon la revendication 8, susceptible d'être obtenu par le procédé des revendications 1 à 5.

10. Corps creux en verre (5, 10) formé par ré-étirage selon l'une quelconque des revendications 8 à 9, **caractérisé en ce qu'**une forme en coupe transversale sous l'aspect d'un profil plan-courbe ou polygonal présente un parallélisme dans lequel, respectivement, des surfaces opposées présentent un écart de moins de 5 % par rapport au parallélisme idéal.

11. Utilisation d'un corps creux en verre selon la revendication 8, comme barrette de moule pour espaces creux dans une géométrie souhaitée de moules de coulée métallique.

12. Utilisation d'un corps creux en verre selon la revendication 8, comme tube éprouvette ou cuvette en technique de laboratoire.
